(19) Europäisches Patentamt
European Patent Office
Office européen des brevets

(11) **EP 1 454 332 B1**

(12) **EUROPÄISCHE PATENTSCHRIFT**

(45) Veröffentlichungstag und Bekanntmachung des Hinweises auf die Patenterteilung:
**03.12.2008 Patentblatt 2008/49**

(51) Int Cl.:
**H01H 9/56** *(2006.01)*

(21) Anmeldenummer: **02799029.0**

(22) Anmeldetag: **10.12.2002**

(86) Internationale Anmeldenummer:
**PCT/DE2002/004573**

(87) Internationale Veröffentlichungsnummer:
**WO 2003/050831 (19.06.2003 Gazette 2003/25)**

(54) **VERFAHREN ZUR ERMITTLUNG EINES ZUKÜNFTIGEN SPANNUNGS UND/ODER STROMVERLAUFS**

METHOD FOR PREDICTING A FUTURE VOLTAGE AND/OR CURRENT CURVE

PROCEDE PERMETTANT DE DETERMINER UNE COURBE DE TENSION ET/OU DE COURANT FUTURE

(84) Benannte Vertragsstaaten:
**CH DE ES FR IT LI SE**

(30) Priorität: **12.12.2001 DE 10162118**

(43) Veröffentlichungstag der Anmeldung:
**08.09.2004 Patentblatt 2004/37**

(73) Patentinhaber: **SIEMENS AKTIENGESELLSCHAFT**
**80333 München (DE)**

(72) Erfinder:
• **PILZ, Georg**
**01159 Dresden (DE)**

• **SCHEGNER, Peter**
**01259 Dresden (DE)**

(56) Entgegenhaltungen:
**EP-A- 1 006 538**

• **JUN-HEE HONG ET AL: "A TIME-DOMAIN APPROACH TO TRANSMISSION NETWORK EQUIVALENTS VIA PRONY ANALYSIS FOR ELECTROMAGNETIC TRANSIENTS ANALYSIS" IEEE TRANSACTIONS ON POWER SYSTEMS, IEEE INC. NEW YORK, US, Bd. 10, Nr. 4, 1. November 1995 (1995-11-01), Seiten 1789-1797, XP000554717 ISSN: 0885-8950 in der Anmeldung erwähnt**

**Beschreibung**

Die Erfindung bezieht sich auf ein Verfahren zur Ermittlung eines zukünftigen Spannungs- und/oder Stromverlaufs in einem elektrischen Energienetz sowie auf eine Vorrichtung zur Durchführung des Verfahrens, wobei vorliegende Spannungs- und/oder Stromdaten zu verschiedenen Zeitpunkten in dem elektrischen Energienetz ermittelt werden und die ermittelten Spannungs- und/oder Stromdaten mittels einer Prony-Methode verarbeitet werden und aufgrund der verarbeiteten Spannungs- und/oder Stromdaten der zukünftige Spannungs- und/oder Stromverlauf bestimmt wird.

In elektrischen Energienetzen, insbesondere Energienetzen zum Übertragen von elektrischer Energie, welche eine sich periodisch ändernde Spannung aufweisen und von einem sich periodisch ändernden Strom durchflossen sind, ist es erwünscht, zukünftige Spannungs- und/oder Stromverläufe vorauszubestimmen zu können. Im ungestörten Betrieb schwingt die Spannung bzw. der Strom periodisch mit einer konstanten Frequenz, einer konstanten Amplitude um eine definierte Nulllage. Durch an ein elektrisches Energienetz angeschlossene elektrische Anlagen kann zwischen der Phasenlage der Spannung und der Phasenlage des Stromes eine Phasenverschiebung auftreten. Je nach den angeschlossenen elektrischen Anlagen treten verschiedene Phasenverschiebungen zwischen Strom und Spannung auf. Zusätzlich können durch unvorhersehbare Ereignisse, wie beispielsweise bei Schaltvorgängen im elektrischen Energienetz entstehende Schaltüberspannungen oder auch Blitzeinschläge in das elektrische Energienetz Spannungsspitzen und Veränderungen in der Periodizität von Strom und Spannung oder auch Einschwingvorgänge auftreten. Für bestimmte Anwendungen ist es notwendig, auch bei stark von der Grundschwingung abweichenden Verläufen den realen Verlauf von Strom und Spannung im elektrischen Energienetz hinsichtlich der Phasenlagen, insbesondere der Nulldurchgänge, sowie ihre Amplituden im Voraus zu bestimmen.

Um den Spannungs- und/oder den Stromverlauf in einem elektrischen Energienetz vorherzusagen, wird beispielsweise die Fourier-Transformation angewandt. Mit Hilfe der Fourier-Transformation wird versucht, die real im elektrischen Energienetz vorliegenden Spannungs- bzw. Stromverläufe durch eine Vielzahl von bekannten miteinander überlagerten Funktionen nachzubilden und daraus den zukünftigen Verlauf der Spannung oder des Stromes in dem elektrischen Energienetz vorherzubestimmen. Die dafür notwendigen Berechnungen sind selbst bei Einsatz modernster Rechentechnik mit einem nicht zu vernachlässigenden Zeitbedarf verbunden.

Aus dem Patent Abstract of Japan, JP 2055528 ist es bekannt, unter Nutzung gemessener Informationen eine zukünftige Systemspannung zu ermitteln.

Aus der europäischen Patentanmeldung EP 1 006 538 A1 ist bekannt, unter Nutzung einer mathematischen Methode einen Schaltzeitpunkt zu ermitteln.

Weiterhin ist es bekannt, bei der Bestimmung von Netzäquivalenten eine Prony-Methode zu verwenden (Hong, J.-H, Park, J.-K., "A Time-Domain Approach To Transmission Network Equivalents Via Prony Analysis For Electromagnetic Transients Analysis", IEEE Transactions on Power Systems, Vol. 10, 1995, No. 4, Seiten 1789-1797).

Nach Amano, M., Watanabe, M., Banjo, M., "Self-Testing And Self-Tuning Of Power System Stabilizers Using Prony Analysis", Power Engineering Society 1999 Winter Meeting, ISBN 0-7803-4893-1, Seiten 655-660 ist eine Verwendung der Prony-Methode für die Parametierung von Reglern bekannt.

Nach Lobos, T., Rezmer, J., Koglin, H.-J., "Analysis of Power System Transients Using Wavelets and Prony Method", Power Tech Proceeding, Sept. 2001, ISBN 0-7803-7139-9 ist ein Vergleich der Prony-Methode mit der Fourier-Analyse bekannt.

Der vorliegenden Erfindung liegt die Aufgabe zugrunde, die Prony Methode bei der Steuerung eines elektrischen Schalters zu berücksichtigen.

Die Aufgabe wird bei einem Verfahren der eingangs genannten Art erfindungsgemäß dadurch gelöst, dass aufgrund der verarbeiteten Spannungs- und/oder Stromdaten bzw. des bestimmten zukünftigen Spannungs- und/oder Stromverlaufs ein Schaltzeitpunkt für einen elektrischen Schalter, insbesondere einen Leistungsschalter, bestimmt wird sowie durch eine Vorrichtung zur Durchführung dieses Verfahrens.

Leistungsschalter sind in der Lage, auch Fehlerströme wie beispielsweise Kurzschlussströme auszuschalten. Bei derartigen fehlerbehafteten Vorgängen treten oftmals Spannungs- und/oder Stromverläufe auf, die stark von der Grundschwingung abweichen. Da ein leistungsstarker Lichtbogen nur in seinem Stromdurchgang erlischt, ist es notwendig, einen Leistungsschalter möglichst unmittelbar vor oder genau in dem Stromnulldurchgang auszuschalten, um das Entstehen von Schaltlichtbögen zu minimieren. Der Zeitpunkt, in dem sich beispielsweise die Kontaktstücke eines Leistungsschalters trennen, ist als Schaltzeitpunkt definiert.

Die Prony-Methode eignet sich zur Realisierung eines gesteuerten Schaltens in besonderer Weise, da im Vergleich zur Fourier-Transformation der Abtastzeitraum der vorliegenden Spannungs- und/oder Stromdaten von der zu erwartenden Grundschwingung unabhängig ist. Weiterhin ist bei Verwendung der Prony-Methode die Phasenverschiebung und die Dämpfung der einzelnen Frequenz-Anteile beliebig erfassbar. Zur Anwendung der Prony-Methode sind zunächst vorliegende Spannungs- und/oder Stromdaten zu verschiedenen Zeitpunkten in dem elektrischen Netz zu ermitteln. Dazu wird von N komplexen Datenpunkten $x[1],...x[N]$ eines beliebigen sinusförmigen oder exponentiell gedämpften Ereignis ausgegangen. Diese Datenpunkte müssen äquidistante Datenpunkte sein. Dieser abgetastete Vorgang kann durch eine Summation von $p$ exponentiellen Funktionen beschrieben werden

$$y[n] = \sum_{k=1}^{p} A_k \exp[(\alpha_k + j2\pi f_k)(n-1)T + j\theta_k] , \qquad (2.1)$$

wobei

$T$ - Abtastperiode in s

$A_k$ - Amplitude des komplexen Exponenten

$\alpha_k$ - Dämpfungsfaktor in s$^{-1}$

$f_k$ - Frequenz der Sinusschwingung in Hz

$\theta_k$ - Phasenverschiebung in Radiant

ist. Im Falle eines real abgetasteten Verlaufes zerfallen die komplexen Exponenten in konjugiert komplexe Paare mit gleicher Amplitude. Dies reduziert die Gl. (2.1)

$$y[n] = \sum_{k=1}^{p/2} 2A_k \exp[\alpha_k (n-1)T] \cos[2\pi f_k (n-1)T + \theta_k] \qquad (2.2)$$

für $1 \leq n \leq N$. Wenn die Anzahl der exponentiellen Funktionen $p$ gerade ist, dann existieren $p/2$ gedämpfte Kosinusfunktionen. Ist die Anzahl ungerade, dann existieren $(p-1)/2$ gedämpfte Kosinusfunktionen und eine sehr schwach gedämpfte Exponentialfunktion.

Eine einfachere Darstellung der Gl. (2.1) erhält man durch Zusammenfassung der Parameter in zeitabhängige und zeitunabhängige.

$$y[n] = \sum_{k=1}^{p} h_k z_k^{n-1} \qquad (2.3)$$

$$h_k = A_k \exp(j\theta_k) \qquad (2.4)$$

$$z_k = \exp[(\alpha_k + j2\pi f_k)T] \qquad (2.5)$$

Der Parameter $h_k$ ist die komplexe Amplitude und stellt einen zeitunabhängigen Konstante dar. Der komplexe Exponent $z_k$ ist ein zeitabhängiger Parameter.

Um einen realen Vorgang mit Hilfe einer Summation nachbilden zu können, ist es notwendig, den mittleren quadratischen Fehler $\rho$ über $N$ abgetastete Datenpunkte zu minimieren.

$$\rho = \sum_{n=1}^{N} \left| \varepsilon[n] \right|^2 \qquad (2.6)$$

$$\varepsilon[n] = x[n] - y[n] = x[n] - \sum_{k=1}^{p} h_k z_k^{n-1} \qquad (2.7)$$

Diese Minimierung erfolgt unter Berücksichtigung der Parameter $h_k$, $z_k$ und $p$. Dies führt zu einem schwierigen nichtlinearen Problem, auch wenn die Anzahl $p$ der exponentiellen Funktionen bekannt ist [vgl. Marple, Lawrence: Digital Spectral Analysis. London: Prentice-Hall International, 1987]. Eine Möglichkeit wäre eine iteratives Lösungsverfahren (Newton - Verfahren). Dies würde allerdings große Rechenkapazitäten voraussetzen, weil oft Matrizen invertiert werden müssen, welche meist größer als die Anzahl der Datenpunkte sind. Für eine effiziente Lösung dieses Problems dient die Prony Methode, welche lineare Gleichungen für die Lösung benutzt. Bei dieser Methode wird der nichlineare Aspekt der exponentiellen Funktionen mit Hilfe einer polynomischen Faktorisierung berücksichtigt. Für diese Art der Faktorisierung existieren schnelle Lösungsalgorithmen.

Die Prony-Methode

Für die Approximation eines Verlaufes ist es notwendig, so viele Datenpunkte aufzunehmen, um die Parameter eindeutig zu bestimmen. Dies bedeutet, daß jeweils $x[1],...,x[2p]$ komplexe Datenpunkte mindestens benötigt werden.

$$x[n] = \sum_{k=1}^{p} h_k z_k^{n-1} \ . \qquad (2.8)$$

Man beachte, daß $x[n]$ verwendet wurde anstatt $y[n]$. Dies geschieht, weil exakt $2p$ komplexe Datenpunkte benötigt werden, welche dem exponentiellen Modell mit den $2p$ komplexen Parametern $h_k$ und $z_k$ entsprechen. Dieser Zusammenhang wird in G1. (2.6) durch die Minimierung des quadratischen Fehlers ausgedrückt.
In G1. (2.8) wurde das Ziel des Prony Algorithmus dargestellt. Eine ausführlichere Darstellung der Gleichung für $1 \leq n \leq p$ ist in G1. (2.9) dargestellt.

$$\begin{pmatrix} z_1^0 & z_2^0 & \cdots & z_p^0 \\ z_1^1 & z_2^1 & \cdots & z_p^1 \\ \vdots & \vdots & \ddots & \vdots \\ z_1^{p-1} & z_2^{p-1} & \cdots & z_p^{p-1} \end{pmatrix} \begin{pmatrix} h_1 \\ h_2 \\ \vdots \\ h_p \end{pmatrix} = \begin{pmatrix} x[1] \\ x[2] \\ \vdots \\ x[p] \end{pmatrix} \qquad (2.9)$$

Bei Kenntnis der Elemente $z$ innerhalb der Matrix ergebe sich eine Anzahl linearer Gleichungen, mit welchen man den komplexen Amplitudenvektor $h$ berechnen kann.
Als Ansatz des Lösungsverfahren wird davon ausgegangen, daß Gl. (2.8) die Lösung einer homogenen linearen Differenzengleichung mit konstanten Koeffizienten ist. Um die entsprechende Gleichung zur Lösung zu finden wird als erstes ein Polynom $\phi(z)$ vom Grade p definiert.

$$\phi_p(z) = a[0]z^p + a[1]z^{p-1} + \ldots + a[p-1]z + a[p] \qquad (2.10)$$

Der zu bestimmende Parameter $z$ gibt die Nullstellen des Polynoms an.
Eine Darstellung des Polynoms als Summation erfolgt mit Hilfe des Fundamentalsatzes der Algebra (G1. 2.11). Der Koeffizent $a[m]$ ist komplex und es wird $a[0] = 1$ definiert.

$$\phi_p(z) = \sum_{m=0}^{p} a[m]z^{p-m} \qquad (2.11)$$

Mit Hilfe einer Verschiebung der Indizes der G1. (2.8) von $n$ zu $n-m$ und Multiplikation mit dem Parameter $a[m]$ erhält man.

$$a[m]x[n-m] = a[m]\sum_{k=1}^{p} h_k z_k^{n-m-1} \qquad (2.12)$$

Werden einfache Produkte $(a[0]x[n],...,a[m-1]x[n-m+1])$ gebildet und diese summiert ergibt sich aus Gl. (2.12)

$$a[0]x[n] = a[0]\sum_{k=1}^{p} h_k z_k^{n-1}$$

$$a[1]x[n-1] = a[1]\sum_{k=1}^{p} h_k z_k^{n-2}$$

$$a[2]x[n-2] = a[2]\sum_{k=1}^{p} h_k z_k^{n-3}$$

$$\vdots \qquad\qquad (2.13)$$

$$a[m]x[n-m] = a[m]\sum_{k=1}^{p} h_k z_k^{n-m-1}$$

$$\overline{\sum_{m=0}^{p} a[m]x[n-m] = \sum_{m=0}^{p}\left[a[m]\sum_{k=1}^{p} h_k z_k^{n-m-1}\right]}$$

Durch eine Umformung der rechten Seite der Gl. (2.13) ergibt sich

$$\sum_{m=0}^{p} a[m]x[n-m] = \sum_{k=1}^{p}\left[h_k \sum_{m=0}^{p} a[m]z_k^{p-m-1}\right]. \qquad (2.14)$$

Durch die Substitution $z_i^{n-m-1} = z_i^{n-p} z_i^{p-m-1}$ erhält man

$$\sum_{m=0}^{p} a[m]x[n-m] = \sum_{k=1}^{p}\left[h_k z_k^{n-p} \sum_{m=0}^{p} a[m]z_k^{p-m-1}\right] = 0. \qquad (2.15)$$

In dem rechten Teil der Summation erkennt man das Polynom aus Gl. (2.11) wieder. Durch eine Bestimmung aller Wurzeln $z_k$ erhält man die gesuchten Nullstellen. Die Gl. (2.15) ist die gesuchte lineare Differenzengleichung, deren Lösung die Gl. (2.8) ist. Das Polynom (2.11) ist die charakteristische Gleichung zu der Differenzengleichung. Die $p$ - Gleichungen repräsentieren die zulässigen Werte für $a[m]$, welche die Gl. (2.15) lösen.

$$
\begin{pmatrix}
x[p] & x[p-1] & x[p-2] & \cdots & x[0] \\
x[p+1] & x[p] & x(p-1) & \cdots & x[1] \\
x[p+2] & x[p+1] & x[p] & \cdots & x[2] \\
\vdots & \vdots & & \ddots & \vdots \\
x[2p-1] & x[2p-1] & x[2p-3] & \cdots & x[p]
\end{pmatrix}
\begin{pmatrix}
a[0] \\
a[1] \\
a[2] \\
\vdots \\
a[p]
\end{pmatrix}
= 0 \qquad (2.16)
$$

In Gl. (2.16) existieren $p$ - Unbekannte. Die Matrix $x$ besteht aus $p$+1 - Zeilen und Spalten. Die Gl. (2.16) ist also überbestimmt. Um einen Lösungsvektor zu erhalten wird die obere Zeile der Matrix $x$, und so auch der bekannte Koeffizient $a$[0], gestrichen und die erste Spalte subtrahiert.

$$
\begin{pmatrix}
x[p] & x[p-1] & \cdots & x[1] \\
x[p+1] & x[p] & \cdots & x[2] \\
\vdots & \vdots & \ddots & \vdots \\
x[2p-1] & x[2p-2] & \cdots & x[p]
\end{pmatrix}
\begin{pmatrix}
a[1] \\
a[2] \\
\vdots \\
a[p]
\end{pmatrix}
= -
\begin{pmatrix}
x[p+1] \\
x[p+2] \\
\vdots \\
x[2p]
\end{pmatrix}
\qquad (2.17)
$$

Mit Hilfe der $p$ - Gleichungen können die $p$ - Unbekannten bestimmt werden.
Die Prony-Methode kann so in drei Schritten zusammengefasst werden.

1. Lösung der Gl. (2.17) $\Rightarrow$ Erhalt der Koeffizienten des Polynoms (2.11)
2. Berechnung der Wurzeln des Polynoms Gl. (2.11) $\Rightarrow$ Erhalt des zeitabhänigen Parameters $z_k$ aus Gl (2.8) $\Rightarrow$ Berechnung der Dämpfung und Frequenz aus $z$

$$
\alpha_k = \ln|z_k|/T \qquad (2.18)
$$

$$
f_k = \tan^{-1}[\mathrm{Im}(z_k)/\mathrm{Re}(z_k)]/[2\pi T] \qquad (2.19)
$$

3. Aufstellung der Gl. (2.9) $\Rightarrow$ Auflösung nach $h$ $\Rightarrow$ Berechnung der Amplitude und der Phasenverschiebung

$$
A_k = |h_k| \qquad (2.20)
$$

$$
\theta_k = \tan^{-1}[\mathrm{Im}(h_k)/\mathrm{Re}(h_k)] \qquad (2.21)
$$

Für eine Estimation des zukünftigen Zeitverlaufs ist es nicht notwendig die einzelnen Parameter zu bestimmen. Die "Vorrausschau" des weiteren Verlaufs des Eingangssignals ist auch möglich mit Hilfe der Parameter $z_k$ und $h_k$, der Gl. (2.8) und eine Änderung der Variablen $n$, welche den zu estimierenden Zeitbereich wiederspiegelt. Bei einer Veränderung der Zeitschrittweite der Estimation gegenüber der Abtastung müssen aber die Parameter Dämpfung, Frequenz, Amplitude und Phasenverschiebung explizit bestimmt werden.
Ein weiterer Vorteil der Prony-Methode für die Analyse von Strom- und/oder Spannungsverläufen ist, dass sie auch für höherfrequente Vorgänge anwendbar ist. Unter höherfrequenten Vorgängen sind Vorgänge zu verstehen, die im Bereich von 100-700 Hz schwingen. Der betriebsfrequente Bereich umfasst die Frequenzen zwischen 24 und 100 Hz. Unter 24 Hz sind die niederen Frequenzen zu verstehen. Hochfrequente Vorgänge entstehen beispielsweise beim Schalten von Schaltgeräten. Die hochfrequenten Anteile überlagern die Grundschwingung.

Weiterhin kann vorteilhafterweise vorgesehen sein, dass zur Verarbeitung der ermittelten Spannungs- und/oder Stromdaten eine modifizierte Prony-Methode verwendet wird.

Die modifizierte Prony-Methode weist Ähnlichkeit mit dem Maximum-Likelihood Prinzip (Gaußsches Prinzip der kleinsten Quadrate) auf. Bei der Berechnung wird von einem festen p (Anzahl der exponentiellen Funktionen, siehe oben) ausgegangen. Während der Berechnung wird ein Iterationsverfahren durchgeführt, wodurch die Genauigkeit der vorauszubestimmenden Spannungs- und/oder Stromverläufe optimiert wird. Durch Festlegung von Toleranzgrenzen für die Optimierung ist der Grad der Genauigkeit der Vorausbestimmung variierbar. Je nach Bedarf ist dadurch die notwendige Rechenzeit verminderbar. Die modifizierte Prony-Methode ist in Osborne, Smyth: A modified Prony Algorithm for fitting functions defined by difference equations, SIAM Journal of Scientific and Statistical Computing, Vol. 12, 362-382, March 1991 ausführlich vorgestellt. Die modifizierte Prony-Methode ist gegenüber einem "Rauschen" der aus dem elektrischen Energienetz ermittelten Spannungs- und/oder Stromdaten unempfindlich. Ein derartiges "Rauschen" ist bei der Verwendung von realen Bauteilen zur Ermittlung der Spannungs- und/oder Stromdaten unvermeidbar. Derartige Störungen können nur mit einem unverhältnismäßig hohen Aufwand minimiert werden. Durch die Robustheit gegenüber einem "Rauschen" der Eingangssignale ist bei Verwendung der modifizierten Prony-Methode der Einsatz von kostengünstigen Messgeräten zur Ermittlung der vorliegenden Spannungs- und/oder Stromdaten in dem elektrischen Netz möglich.

Es kann vorgesehen sein, eine Vorrichtung zur Durchführung der oben beschriebenen Verfahren vorzusehen, welche Mittel zur automatisierten Verarbeitung der Spannungs- und/oder Stromdaten unter Verwendung der Prony-Methoden aufweist.

Da die betrachteten Vorgänge in Intervallen von einigen wenigen Millisekunden ablaufen, erweist sich eine Vorrichtung mit Mitteln zur automatisierten Verarbeitung der Spannungs- und/oder Stromdaten als vorteilhaft. Um diese automatisierte Verarbeitung besonders rasch durchzuführen, kann vorgesehen sein, dass die Mittel zur automatisierten Verarbeitung verdrahtungsprogrammiert ausgeführt sind. Derartige Schaltungen sind als anwendungsspezifische integrierte Schaltkreise "ASIC" bekannt. Sollten jedoch hinreichend schnelle Mittel zur automatisierten Verarbeitung zur Verfügung stehen, so können diese speicherprogrammierbar ausgeführt sein. Derartige speicherprogrammierbare Mittel zur automatisierten Verarbeitung können in einfacher Weise durch Neuprogrammierungen an wechselnde Rahmenbedingungen angepasst werden.

Im Folgenden wird die Erfindung anhand eines Ausführungsbeispiels in einer Zeichnung gezeigt und nachfolgend näher beschrieben.

Dabei zeigt die

Figur eine schematische Anordnung eines elektrischen Leistungsschalters sowie eine Vorrichtung mit Mitteln zur automatisierten Verarbeitung.

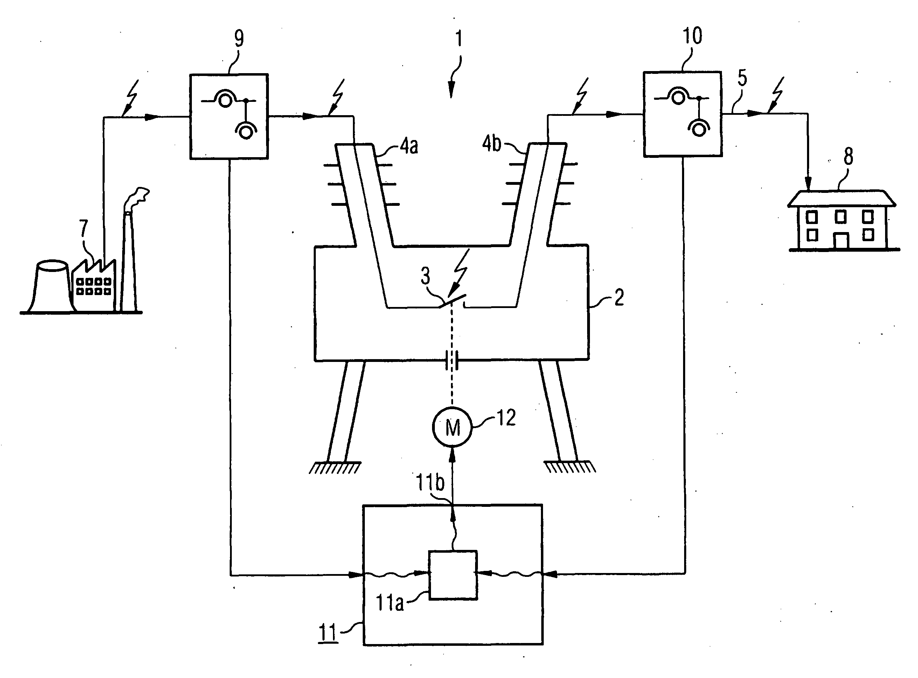

Die Figur zeigt einen Schnitt durch einen schematisch dargestellten Hochspannungs-Leistungsschalter 1. Der Hochspannungs-Leistungsschalter 1 weist eine Kapselung 2 auf, in welcher eine Unterbrechereinheit 3 des Hochspannungs-Leistungsschalters 1 angeordnet ist. Mittels Hochspannungs-Durchführungen 4a,b ist die Unterbrechereinheit 3 des Hochspannungs-Leistungsschalters 1 an ein elektrisches Energienetz 5 angeschlossen. Das elektrische Energienetz 5 kann beispielsweise ein Freileitungsnetz zur Übertragung elektrischer Energie von einem Kraftwerk 7 zu einem Abnehmer 8 sein. In Energieflussrichtung vor dem Hochspannungs-Leistungsschalter 1 ist eine erste Messvorrichtung 9 angeordnet. In Energieflussrichtung nach dem Hochspannungs-Leistungsschalter 1 ist eine zweite Messvorrichtung 10 angeordnet. Die erste Messvorrichtung 9 sowie die zweite Messvorrichtung 10 können beispielsweise Stromwandler und Spannungswandler sowie weitere Vorrichtungen umfassen. Darüber hinaus kann vorgesehen sein, nur eine der beiden Messvorrichtungen 9, 10 zu verwenden. Die von der ersten und der zweiten Messvorrichtung 9, 10 ermittelten Daten, beispielsweise Spannungs- und/oder Stromdaten, werden zu einer Vorrichtung 11 übertragen. Die Vorrichtung 11 weist Mittel 11a zur automatisierten Verarbeitung der Spannungs- und/oder Stromdaten auf. Die Mittel 11a zur automatisierten Verarbeitung können beispielsweise verdrahtungsprogrammierte Steuerungen oder speicherprogrammierte Steuerungen sein, welche die allgemeine Prony-Methode und/oder die modifizierte Prony-Methode ausführen. An der Vorrichtung 11 kann weiterhin ein Signalausgang 11b vorgesehen sein, welcher unmittelbar oder unter Zwischenschaltung weiterer nicht dargestellter Vorrichtungen auf ein Antriebsaggregat 12 einwirkt, welches zu einem bestimmten Zeitpunkt, beispielsweise vor einem Spannungs- oder Stromnulldurchgang oder einen anderen geeigneten Zeitpunkt, die Schaltbewegung der Unterbrechereinheit 3 bewirkt. Diese Schaltbewegung kann beispielsweise eine Einschalt- oder Ausschaltbewegung sein.

**Patentansprüche**

1. Verfahren zur Ermittlung eines zukünftigen Spannungs- und/oder Stromverlaufs in einem elektrischen Energienetz (5),
wobei

- vorliegende Spannungs- und/oder Stromdaten zu verschiedenen Zeitpunkten in dem elektrischen Energienetz (5) ermittelt werden,
- die ermittelten Spannungs- und/oder Stromdaten mittels einer Prony-Methode verarbeitet werden,
- aufgrund der verarbeiteten Spannungs- und/oder Stromdaten der zukünftige Spannungs- und/oder Stromverlauf bestimmt wird, und
- aufgrund der verarbeiteten Spannungs- und/oder Stromdaten bzw. des bestimmten zukünftigen Spannungs- und/oder Stromverlaufs ein Schaltzeitpunkt für einen elektrischen Schalter, insbesondere einen Leistungsschalter (1), bestimmt wird.

**2.** Vorrichtung (11) zur Durchführung des Verfahrens nach Anspruch 1, wobei
die Vorrichtung Mittel (11b) zur automatisierten Verarbeitung der Spannungs- und/oder Stromdaten unter Verwendung der Prony-Methode aufweist.


**Claims**

**1.** Method for determination of a future voltage and/or current waveform in an electrical power supply system (5),
in which

- present voltage and/or current data are/is determined at various times in the electrical power supply system (5),
- the determined voltage and/or current data are/is processed by means of a Prony method,
- the future voltage and/or current waveform is determined on the basis of the processed voltage and/or current data, and
- a switching time for an electrical switch, in particular a circuit breaker (1) is determined on the basis of the processed voltage and/or current data and the determined future voltage and/or current waveform.

**2.** Apparatus (11) for carrying out the method according to Claim 1,
in which
the apparatus has means (11b) for automated processing of the voltage and/or current data using the Prony method.


**Revendications**

**1.** Procédé de détermination d'une courbe de tension et/ou de courant à venir dans un réseau (5) d'énergie électrique,
dans lequel

- on détermine des données présentes de tension et/ou de courant à des instants différents dans le réseau (5) d'énergie électrique,
- on traite les données de tension et/ou de courant déterminées au moyen d'une méthode de Prony,
- sur la base des données de tension et/ou de courant traitées, on détermine la courbe de tension et/ou de courant à venir, et
- sur la base des données de tension et/ou de courant traitées, ou de la courbe de tension et/ou de courant déterminée à venir, on détermine un instant de commutation pour un interrupteur électrique, notamment un disjoncteur (1).

**2.** Dispositif (11) pour la mise en oeuvre du procédé suivant la revendication 1,
dans lequel
le dispositif a des moyens (11b) de traitement automatisé des données de tension et/ou de courant en utilisant la méthode de Prony.

EP 1 454 332 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2055528 A

- EP 1006538 A1

**In der Beschreibung aufgeführte Nicht-Patentliteratur**

- **HONG, J.-H ; PARK, J.-K.** A Time-Domain Approach To Transmission Network Equivalents Via Prony Analysis For Electromagnetic Transients Analysis. *IEEE Transactions on Power Systems,* 1995, vol. 10 (4), 1789-1797
- **NACH AMANO, M. ; WATANABE, M. ; BANJO, M.** Self-Testing And Self-Tuning Of Power System Stabilizers Using Prony Analysis. *Power Engineering Society,* 1999, ISBN 0-7803-4893-1, 655-660

- **NACH LOBOS, T. ; REZMER, J. ; KOGLIN, H.-J.** Analysis of Power System Transients Using Wavelets and Prony Method. *Power Tech Proceeding,* September 2001, ISBN ISBN 0-7803-7139-9
- **MARPLE ; LAWRENCE.** Digital Spectral Analysis. Prentice-Hall International, 1987
- **OSBORNE ; SMYTH.** A modified Prony Algorithm for fitting functions defined by difference equations. *SIAM Journal of Scientific and Statistical Computing,* Marz 1991, vol. 12, 362-382